# EUROPÄISCHE PATENTANMELDUNG

(11) **EP 2 578 480 A1**
(43) Veröffentlichungstag der Anmeldung: **10.04.2013**
(21) Anmeldenummer: 12006862.2
(22) Anmeldetag: 02.10.2012
(51) Int. Cl.: B62J 23/00, B62M 9/128

(54) **Schutzvorrichtung für ein Fahrradkettenschaltwerk**

(30) Priorität: 05.10.2011 DE 102011114835
(71) Anmelder: Niemann, Wolfram, 56068 Koblenz (DE)
(72) Erfinder: Niemann, Wolfram, 56068 Koblenz (DE)
(74) Vertreter: Bittner, Bernhard

(57) **Zusammenfassung**

Die Erfindung betrifft eine Schutzvorrichtung (1) für ein Fahrradkettenschaltwerk (2) vor äußerer mechanischer Beschädigung mit einer Abdeckeinrichtung (5) zum zumindest teilweisen Abdecken des Fahrradkettenschaltwerkes (2) und mit einer Befestigungseinrichtung (6) zum Befestigen der Schutzvorrichtung (1) an wenigstens einer Fahrradkomponente (8) des Fahrrades, bei welcher die Befestigungseinrichtung (6) eine an der wenigstens einen Fahrradkomponente (8) selbsthaltende Schnellmontageeinheit (7) mit zwei oder mehr an der wenigstens einen Fahrradkomponente (8) beabstandet voneinander fest aber lösbar anbringbaren Befestigungselementen (9, 10) aufweist.

## Beschreibung

Die Erfindung betrifft eine Schutzvorrichtung für ein Fahrradkettenschaltwerk vor äußerer mechanischer Beschädigung mit einer Abdeckeinrichtung zum zumindest teilweisen Abdecken des Fahrradkettenschaltwerkes und mit einer Befestigungseinrichtung zum Befestigen der Schutzvorrichtung an wenigstens einer Fahrradkomponente des Fahrrades.

Ein Fahrradkettenschaltwerk an einem Hinterrad eines Fahrrades aber auch eine diesbezügliche Halteeinrichtung zum Halten des Fahrradschaltwerkes an einem Fahrradrahmen des Fahrrades gehören mit zu den empfindlichsten Fahrradkomponenten gegenüber äußeren mechanischen Einflüssen.

So existiert zum Schutz vor solchen äußeren mechanischen Einflüssen bereits eine Vielzahl an unterschiedlich gestalteten Schutzvorrichtungen, welche derart dauerhaft an das Fahrrad angebracht werden, dass sie das vorhandene Fahrradkettenschaltwerk zumindest teilweise überdecken. Insofern ist das jeweilige Fahrradkettenschaltwerk speziell im Fahrbetrieb gegenüber von Außen einwirkenden Einflüssen stets gut geschützt.

Beispielsweise ist aus der Gebrauchsmusterschrift DE 87 14 518 U1 ein Schutz von Fahrradketten und insbesondere von Schaltwerken sowie von Zahnrädern der an der Hinterradachse vorgesehenen Gangschaltung eines Fahrrades bekannt. Der Schutz umfasst einen Zahnrad- und Schaltungsschutz mit einem eine Bohrung aufweisenden oberen Quersteg, von welchem ausgehend sich zwei Längsstreben nach unten erstrecken, die unterseitig in eine untere Querstrebe ineinander übergehen. Der obere Quersteg wird mit der Bohrung auf die Hinterradachse aufgesteckt und mittels der hinterrradseitigen Radachsenmutter festgeschraubt. Dieser Zahnrad- und Schaltungsschutz bietet einen guten Schutz gegenüber im Wesentlichen seitlich auf das Schaltwerk einwirkende Ereignisse. Um den Schutz speziell gegenüber von vorn auf das Schaltwerk einwirkende äußere Ereignisse verbessern zu können, ist in Fahrtrichtung gesehen vor dem Zahnrad- und Schaltungsschutz noch ein Astabweiser vorgesehen, der an der vorderen der beiden Längsstreben angeschweißt ist.

Gattungsgemäße Schutzvorrichtungen können somit gut vor Beschädigungen schützen; sie haben jedoch den Nachteil, dass sie für viele Fahrer ein nicht akzeptables Mehrgewicht mit sich bringen. Speziell an Sporträdern, wie etwa Rennrädern, wird sehr großer Wert darauf gelegt, jedes überflüssige Gramm an Fahrradgewicht zu vermeiden. Diese Gewichtsersparnis wird oft durch den Einsatz sehr teurer Fahrradkomponenten erkauft. Allein aus den vorgenannten Gründen werden bekannte Schutzvorrichtungen oftmals nicht verbaut.

So besteht jedoch insbesondere bei einem Transport von derartigen Fahrrädern auch weiterhin das Problem, dass das Fahrradkettenschaltwerk etwa gegenüber einer kritischen Druckbelastung ungeschützt ist. Beispielsweise kann sich speziell das Schaltauge, über welches die Fahrradkettenschaltung an dem Fahrradrahmen befestigt ist, kritisch und schlimmstenfalls irreparabel verbiegen, wenn Fahrräder übereinander liegend im Innenraum eines Fahrzeuges transportiert werden. Aber auch beim Aufladen und Abnehmen des Fahrrades auf eine bzw. von einer Transporteinrichtung oder durch Anschlagen von Gepäckstücken kann eine kritische Beschädigung etwa auf Grund eines kurzen Druckschlages auftreten.

Es ist Aufgabe vorliegender Erfindung eine Schutzvorrichtung bereitzustellen, mittels welcher zumindest die vorstehend genannten Nachteile vermieden werden können.

Die Aufgabe der Erfindung wird von einer Schutzvorrichtung für ein Fahrradkettenschaltwerk vor äußerer mechanischer Beschädigung mit einer Abdeckeinrichtung zum zumindest teilweisen Abdecken des Fahrradkettenschaltwerkes und mit einer Befestigungseinrichtung zum Befestigen der Schutzvorrichtung an wenigstens einer Fahrradkomponente des Fahrrades gelöst, bei welcher die Befestigungseinrichtung eine an der wenigstens einen Fahrradkomponente selbsthaltende Schnellmontageeinheit mit zwei oder mehr an der wenigstens einen Fahrradkomponente beabstandet voneinander fest aber lösbar anbringbaren Befestigungselementen aufweist.

Vorteilhafter Weise ist es mittels der selbsthaltenden Schnellmontageeinheit problemlos möglich, die Schutzvorrichtung temporär schnell und bequem an das Fahrrad zu montieren und zudem derart sicher an diesem zu befestigen, dass das Fahrradkettenschaltwerk während eines Transportzustands vor einer längeren oder auch schlagartigen Druckbelastung eines von außen einwirkenden Ereignisses gut geschützt ist. Hierbei kann dann die Schutzvorrichtung beim Einsatz des Fahrrades ebenso schnell wieder vom Fahrrad demontiert werden, so dass keine Gewichtsnachteile im Gebrauchszustand des Fahrrades hinzunehmen sind.

Der Begriff "selbsthaltende Schnellmontageeinheit" beschreibt vorliegend jegliche technische Einrichtungen, mittels welchen eine gattungsgemäße Schutzvorrichtung ohne ein aktives Betätigen eines fahrradseitigen Befestigungsmittels, wie etwa einer Hinterradachsenmutter oder dergleichen, an dem Fahrrad befestigt werden kann. Die selbsthaltende Schnellmontageeinheit ist somit ohne zusätzliche fahrradseitige Fremdhaltemittel an dem Fahrrad befestigbar. Hierdurch können eine besonders schnelle Montage und Demontage der Schutzvorrichtung gewährleistet werden.

Die Begrifflichkeit "Fahrradkettenschaltwerk" impliziert im Sinne der Erfindung auch das Schaltauge, mittels welchem das eigentliche Fahrradkettenschaltwerk an einem Fahrradrahmen angeordnet ist. Insofern dient die vorliegende Schutzvorrichtung auch dem Schutz des Schaltauges vor Verbiegung bzw. Bruch.

Unter dem Begriff "Fahrradkomponente" ist vorliegend jegliches Bauteil eines Fahrrades verstanden, welches dazu geeignet erscheint, die Befestigungseinrichtung betriebssicher aufzunehmen. Beispielsweise zählen hierzu die Hinterradachse und der Fahrradrahmen.

Die erfindungsgemäße Schutzvorrichtung unterscheidet sich gegenüber den bekannten Schutzvorrichtungen insbesondere dadurch, dass sie eine Transportschutzvorrichtung ist, welche lediglich temporär zu Transportzwecken an einem Fahrrad befestigt ist, während die bekannten Schutzvorrichtungen permanent, also auch im Fahrbetrieb, an dem Fahrrad befestigt ist. Die erfindungsgemäße Transportschutzvorrichtung ist für einen Verbleib am Fahrrad im Fahrbetrieb jedoch nicht geeignet.

Eine bevorzugte Ausführungsvariante sieht vor, dass die selbsthaltende Schnellmontageeinheit eine Schnellspanneinrichtung umfasst, welche gegenüber wenigstens zwei Befestigungsorten an der wenigstens einen Fahrradkomponente verspannbar ist. Eine derartige Spanneinrichtung hat den großen Vorteil, problemlos an wenigstens eine Fahrradkomponente schnell geklemmt werden zu können.

Eine besonders gute Verklemmung der Schutzvorrichtung kann an dem Fahrrad erzielt werden, wenn ein Befestigungselement der selbsthaltenden Schnellmontageeinheit an einer dem Fahrradkettenschaltwerk gegenüberliegenden Fahrradseite anordenbar ist. Hierbei kann eine auf dieser gegenüberliegenden Fahrradseite liegende Fahrradkomponente vorteilhaft als Gegenlager für die Befestigungseinrichtung verwendet werden.

Es versteht sich, dass die Befestigungselemente in vielfältiger Gestalt vorliegen können. Es hat sich als besonders vorteilhaft erwiesen, wenn die Befestigungselemente gegenüberliegend angeordnete, auf Radachsenenden aufsetzbare Befestigungskappen aufweisen. Insbesondere die Radachsenenden eignen sich besonders gut als Angriffs- bzw. Befestigungspunkte für die vorliegenden Befestigungselemente. Sind die Befestigungselemente als hierauf aufsetzbare Befestigungskappen ausgestaltet, kann die gesamte Schutzvorrichtung vorteilhaft gegenüber den beiden Radachsenenden zentriert und sicher befestigt werden.

Für eine besonders gute und einfache Zentrierung ist es vorteilhaft, wenn die Befestigungskappen jeweils eine konisch zulaufende Innenaufnahme aufweisen.

Sind die Befestigungselemente im Montagezustand der Schutzvorrichtung in Bezug auf die Fahrradfahrrichtung (insbesondere in Richtung einer Welle für das Hinterrad des Fahrrades) radial voneinander beabstandet angeordnet, kann die Schutzvorrichtung besonders einfach an einer äußerst stabilen und biegesteifen Fahrradkomponente des Fahrrades befestigt werden.

Insofern sieht eine weitere vorteilhafte Ausführungsvariante vor, dass die selbsthaltende Schnellmontageeinheit zwischen Speichen eines Hinterrades hindurch führbar an der wenigstens einen Fahrradkomponente anordenbar ist. Durch eine derartige Speichendurchführung kann eine auf den Hinterradachsenenden aufsitzende Schnellmontageeinheit besonders raumsparend realisiert werden.

Insofern ist es vorteilhaft, wenn die selbsthaltende Schnellmontageeinheit einen auf Radachsenenden aufsetzbaren Schnellspannbügel mit einer daran drehbar gelagerten Gewindespindel aufweist. Mit Hilfe des die Gewindespindel aufweisenden Schnellspannbügels kann die selbsthaltende Schnellmontageeinheit schnell an den Radachsenenden verspannt werden.

Um die Gefahr eines Verdrehens der selbsthaltenden Schnellmontageeinheit in Umfangsrichtung um die Hinterradachse herum und damit ein einhergehendes Verdrehen der Abdeckeinrichtung gegenüber des Fahrradkettenschaltwerks zu vermeiden, ist es vorteilhaft, wenn die selbsthaltende Schnellmontageeinheit eine Verdrehsicherungseinrichtung gegen ein unbeabsichtigtes Verdrehen der selbsthaltenden Schnellmontageeinheit gegenüber einer weiteren Fahrradkomponente umfasst.

Vorteilhafter Weise ist zwischen der selbsthaltenden Schnellmontageeinheit und der Verdrehsicherungseinrichtung ein Sollbruchbereich angeordnet, so dass die Gefahr einer Beschädigung der Hinterradspeichen etwa durch den durch das Hinterrad hindurch führbaren Schnellspannbügel reduziert ist, wenn das Hinterrad bei montierter Schutzvorrichtung zu stark gedreht werden sollte.

Die Verdrehsicherung kann hierbei an unterschiedlichen Orten des Fahrrades befestigt sein. Bevorzugt ist die Verdrehsicherungseinrichtung im Montagezustand der Schutzvorrichtung in Bezug auf die Fahrradfahrrichtung axial vor den Befestigungselementen angeordnet. Hierdurch kann die Baugröße der Verdrehsicherungseinrichtung vorteilhaft gering gehalten werden, da der Befestigungsort der Verdrehsicherungseinrichtung an einer Horizontalstrebe der Hinterradaufhängung vorgesehen werden kann.

Weitere Vorteile, Ziele und Eigenschaften vorliegender Erfindung werden anhand anliegender Zeichnung und nachfolgender Beschreibung erläutert, in welchen beispielhaft eine Schutzvorrichtung für ein Fahrradschaltwerk mit einer eine an wenigstens einer Fahrradkomponente selbsthaltenden Schnellmontageeinheit umfassenden Befestigungseinrichtung dargestellt und beschrieben ist.

In der Zeichnung zeigen:
- Fig. 1: schematisch eine Rückansicht einer Schutzvorrichtung für ein Fahrradkettenschaltwerk mit einer Befestigungseinrichtung umfassend eine selbsthaltende Schnellmontageeinheit mit zwei oder mehr an wenigstens einer Fahrradkomponente beabstandet voneinander fest aber lösbar anbringbaren Befestigungselementen;
- Fig. 2: schematisch eine Seitenansicht der Schutzvorrichtung aus der Figur 1; und
- Fig. 3: schematisch eine Aufsicht der Schutzvorrichtung aus den Figuren 1 und 2.

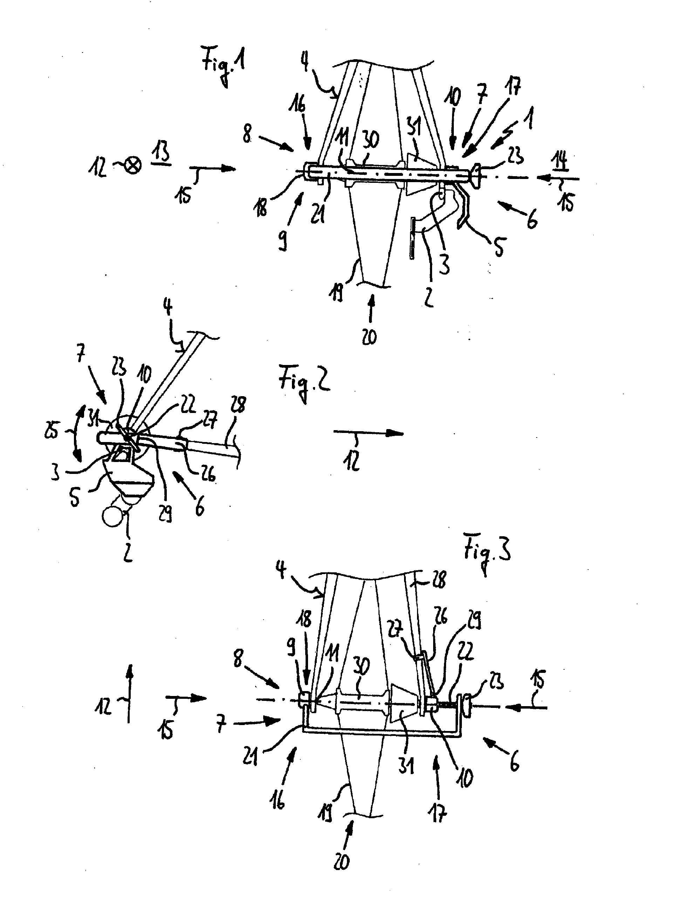

Die in den Figuren 1 bis 3 gezeigte Schutzvorrichtung 1 für ein Fahrradkettenschaltwerk 2 umfassend ein Schaltauge 3 zum Halten des Fahrradkettenschaltwerks 2 an einem Fahrradrahmen 4 eines hier nicht weiter gezeigten Fahrrades weist eine Abdeckeinrichtung 5 auf, mittels welcher das Fahrradkettenschaltwerk 2 zumindest teilweise radial seitlich abgedeckt werden kann.

Die Schutzvorrichtung 1 weist darüber hinaus eine Befestigungseinrichtung 6 mit einer selbsthaltenden Schnellmontageeinheit 7 mit zwei an wenigstens einer Fahrradkomponente 8 beabstandet voneinander fest aber lösbar an der wenigstens einen Fahrradkomponente 8 anbringbaren Befestigungselementen 9 und 10 auf. Als die wenigstens eine Fahrradkomponente 8 wird in diesem Ausführungsbeispiel die Hinterradachse 11 verwendet, welche in den Darstellungen gemäß der Figuren 1 und 3 lediglich als strichpunktierte Linie illustriert ist.

Hierbei ist das erste Befestigungselement 9 der selbsthaltenden Schnellmontageeinheit 7 in Fahrtrichtung 12 gesehen auf der linken Fahrradseite 13 des Fahrrades und das zweite Befestigungselement 10 auf der rechten Fahrradseite 14 des Fahrrades platziert. Insofern ist das erste Befestigungselement 9 auf der dem Fahrradkettenschaltwerk 2 gegenüberliegenden Fahrradseite 13 angeordnet.

Die Befestigungselemente 9 und 10 werden hierbei einfach von radial 15 außen über bzw. auf die Radachsenenden 16 und 17 der Hinterradachse 11 gesteckt. Hierzu sind sie als Befestigungskappen 18 (hier nur exemplarisch an dem Radachsenende 16 beziffert) ausgebildet, so dass ein besonders sicherer Sitz an der Hinterradachse 11 gewährleistet ist.

Zum konstruktiv einfachen Verspannen der Befestigungselemente 9 und 10 an der Hinterradachse 11 ist ein zwischen den Speichen 19 des Hinterrades 20 durchgeführter Schnellspannbügel 21 vorgesehen. Der Schnellspannbügel 21 verfügt über eine Gewindespindel 22, mittels welcher das zweite Befestigungselement 10 linear auf das erste Befestigungselement 9 zu bewegt werden kann, so dass zwischen den beiden Befestigungselementen 9 und 10 letztendlich die Hinterradachse 11 eingeklemmt ist.

Zum einfachen händischen Verspannen der selbsthaltenden Schnellmontageeinheit 7 an der Hinterradachse 11 ist an der Gewindespindel 22 eine Betätigungseinrichtung 23 zum Anpacken und Drehen der Gewindespindel 22 vorgesehen.

Insbesondere durch den Schnellspannbügel 21, der Gewindespindel 22 und den Befestigungselementen 9 und 10 ist eine baulich einfach gestaltete Schnellspanneinrichtung (der Übersichtlichkeit nicht explizit beziffert) für die selbsthaltende Schnellmontageeinheit 7 umgesetzt, mittels welcher die Schutzvorrichtung 1 an wenigstens zwei Befestigungsorten (der Übersichtlichkeit halber nicht beziffert) an dem Fahrrad befestigbar ist. In diesem Ausführungsbeispiel sind die zwei Befestigungsorte durch die beiden Radachsenenden 16 und 17 definiert.

Um ein unbeabsichtigte Verdrehen der Schutzvorrichtung 1 in Umfangsrichtung 25 der Hinterradachse 11 verhindern zu können, verfügt die Schutzvorrichtung 1 noch über eine Verdrehsicherungseinrichtung 26, welche mittels eines Schnappverschlusses 27 an der rechten Horizontalstrebe 28 des Fahrradrahmens 4 gehalten ist.

Zwischen der Verdrehsicherungseinrichtung 26 und der selbsthaltenden Schnellmontageeinheit 7 ist ein Sollbruchbereich 29 vorgesehen, um Beschädigungen des Hinterrades 20 durch den Schnellspannbügel 21 verhindern zu können, sollte das Hinterrad 20 bei montierter Schutzvorrichtung 1 unbeabsichtigt einmal zu stark gedreht werden.

Die Verdrehsicherungseinrichtung 26 ist in diesem Ausführungsbeispiel mittels des Sollbruchbereichs 29 schwenkbar an dem rechten Befestigungselement 10 angeordnet und befindet sich insbesondere im Montagezustand der Schutzvorrichtung 1 in Bezug auf die Fahrtrichtung 12 axial vor dem Befestigungselement 10. Insofern kann die Verdrehsicherungseinrichtung 26 bei montierter selbsthaltender Schnellmontageeinheit 7 mittels einer einfachen Schwenkbewegung an der Horizontalstrebe 28 befestigt bzw. von dieser gelöst werden.

Der Vollständigkeit halber seien noch die Hinterradnabe 30, an welcher die Speichen 19 eingespeicht sind, und die Ritzelkassette 31 des Hinterrades 20 beziffert.

Es versteht sich, dass es sich bei dem vorstehend erläuterten Ausführungsbeispiel lediglich um eine erste Ausgestaltung der erfindungsgemäßen Schutzvorrichtung 1 handelt. Insofern beschränkt sich die Ausgestaltung der Erfindung nicht auf dieses Ausführungsbeispiel.

Der Anmelder behält sich vor sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Schutzvorrichtung
- 2: Fahrradkettenschaltwerk
- 3: Schaltauge
- 4: Fahrradrahmen
- 5: Abdeckeinrichtung
- 6: Befestigungseinrichtung
- 7: selbsthaltende Schnellmontageeinheit
- 8: Fahrradkomponente
- 9: erstes Befestigungselement
- 10: zweites Befestigungselement
- 11: Hinterradachse
- 12: Fahrtrichtung
- 13: linke Fahrradseite
- 14: rechte Fahrradseite
- 15: radial
- 16: linkes Radachsenende
- 17: rechtes Radachsenende
- 18: Befestigungskappen
- 19: Speichen
- 20: Hinterrad
- 21: Schnellspannbügel
- 22: Gewindespindel
- 23: Betätigungseinrichtung
- 25: Umfangsrichtung
- 26: Verdrehsicherungseinrichtung
- 27: Schnappverschluss
- 28: Horizontalstrebe
- 29: Sollbruchbereich
- 30: Hinterradnabe
- 31: Ritzelkassette

## Patentansprüche

1. Schutzvorrichtung (1) für ein Fahrradkettenschaltwerk (2) vor äußerer mechanischer Beschädigung mit einer Abdeckeinrichtung (5) zum zumindest teilweisen Abdecken des Fahrradkettenschaltwerkes (2) und mit einer Befestigungseinrichtung (6) zum Befestigen der Schutzvorrichtung (1) an wenigstens einer Fahrradkomponente (8) des Fahrrades,
**dadurch gekennzeichnet, dass**
die Befestigungseinrichtung (6) eine an der wenigstens einen Fahrradkomponente (8) selbsthaltende Schnellmontageeinheit (7) mit zwei oder mehr an der wenigstens einen Fahrradkomponente (8) beabstandet voneinander fest aber lösbar anbringbaren Befestigungselementen (9, 10) aufweist.

2. Schutzvorrichtung (1) nach Anspruch 1,
**dadurch gekennzeichnet, dass**
eines (9) der Befestigungselemente (9, 10) der Schnellmontageeinheit (7) an einer dem Fahrradkettenschaltwerk (2) gegenüberliegenden Fahrradseite (13) anordenbar ist.

3. Schutzvorrichtung (1) nach Anspruch 1 oder 2,
**dadurch gekennzeichnet, dass**
die Befestigungselemente (9, 10) gegenüberliegend angeordnete, auf Radachsenenden (16, 17) aufsetzbare Befestigungskappen (18) aufweisen.

4. Schutzvorrichtung (1) nach einem der Ansprüche 1 bis 3,
**dadurch gekennzeichnet, dass**
die Befestigungselemente (9, 10) im Montagezustand der Schutzvorrichtung (1) in Bezug auf die Fahrradfahrrichtung (12) radial voneinander beabstandet angeordnet sind.

5. Schutzvorrichtung (1) nach einem der Ansprüche 1 bis 4,
**dadurch gekennzeichnet, dass**
die selbsthaltende Schnellmontageeinheit (7) eine Schnellspanneinrichtung umfasst, welche gegenüber wenigstens zwei Befestigungsorten (16, 17) an der wenigstens einen Fahrradkomponente (8) verspannbar ist.

6. Schutzvorrichtung (1) nach einem der Ansprüche 1 bis 5,
**dadurch gekennzeichnet, dass**
die selbsthaltende Schnellmontageeinheit (7) zwischen Speichen (19) eines Hinterrades (20) hindurch führbar an der wenigstens einen Fahrradkomponente (8) anordenbar ist.

7. Schutzvorrichtung (1) nach einem der Ansprüche 1 bis 6,
**dadurch gekennzeichnet, dass**
die selbsthaltende Schnellmontageeinheit (7) einen auf Radachsenenden (16, 17) aufsetzbaren Schnellspannbügel (21) mit einer daran drehbar gelagerten Gewindespindel (22) aufweist.

8. Schutzvorrichtung (1) nach einem der Ansprüche 1 bis 7,
**dadurch gekennzeichnet, dass**
die selbsthaltende Schnellmontageeinheit (7) eine Verdrehsicherungseinrichtung (26) gegen ein unbeabsichtigtes Verdrehen der selbsthaltenden Schnellmontageeinheit (7) gegenüber einer weiteren Fahrradkomponente (8) umfasst.

9. Schutzvorrichtung (1) nach Anspruch 8,
**gekennzeichnet durch**
zwischen der selbsthaltenden Schnellmontageeinheit (7) und der Verdrehsicherungseinrichtung (26) ein Sollbruchbereich (29) angeordnet ist.

10. Schutzvorrichtung (1) nach Anspruch 8 oder 9,
**dadurch gekennzeichnet, dass**
die Verdrehsicherungseinrichtung (26) im Montagezustand der Schutzvorrichtung (1) in Bezug auf die Fahrradfahrrichtung (12) axial vor den Befestigungselementen (9, 10) angeordnet ist.
